(19) **Europäisches Patentamt / European Patent Office / Office européen des brevets**

(11) **EP 4 660 229 A1**

(12) **EUROPEAN PATENT APPLICATION**
published in accordance with Art. 153(4) EPC

(43) Date of publication:
**10.12.2025 Bulletin 2025/50**

(21) Application number: **24750281.8**

(22) Date of filing: **30.01.2024**

(51) International Patent Classification (IPC):
*C08J 9/36* (2006.01)   *C08J 7/18* (2006.01)
*C08J 9/26* (2006.01)

(52) Cooperative Patent Classification (CPC):
**C08J 7/18; C08J 9/26; C08J 9/36; Y02E 60/10**

(86) International application number:
**PCT/JP2024/002816**

(87) International publication number:
**WO 2024/162332 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.02.2023 JP 2023015408**

(71) Applicant: **Teijin Limited**
**Osaka-shi, Osaka 530-0005 (JP)**

(72) Inventor: **IKUTA, Yoshikazu**
**Osaka-shi, Osaka 530-0005 (JP)**

(74) Representative: **Carpmaels & Ransford LLP**
**One Southampton Row**
**London WC1B 5HA (GB)**

(54) **POLYOLEFIN MICROPOROUS MEMBRANE**

(57) A polyolefin microporous membrane including a polyolefin, having a Gurley value of 0.01 seconds/100 mL or more and 20 seconds/100 mL or less, a thickness of 120 $\mu$m or more, a porosity of 77% or more and 98% or less, and an average pore size of 0.60 $\mu$m or more and 3.0 $\mu$m or less.

EP 4 660 229 A1

## Description

Technical Field

The present disclosure relates to a polyolefin microporous membrane.

Background Art

Nonwoven fabrics are widely used as means for collecting foreign matter in gas or liquid. For example, Patent Literature 1 describes a liquid filter composed of a nonwoven fabric and used in an immersion-type filtration cartridge.

Citation List

Patent Literature

Patent Literature 1:JP2019-198833A

Summary of Invention

Technical Problem

As a collection target, in the case of an ionic substance, a nonwoven fabric filter is used as a substrate, surface treatment is performed thereon, and ionic substances may be collected. However, when a nonwoven fabric filter is used, the nonwoven fabric has a short curved path, and thus the frequency of collecting the ionic substance is relatively low, and it is difficult to achieve both the collection performance of the ionic substance and the permeability of the fluid containing the ionic substance. Therefore, when the surface treatment is performed, a substrate that achieves both the collection performance of the ionic substance and the permeability of the fluid has been required.

There is a limit to solving such a required characteristic with a nonwoven fabric, but the polyolefin microporous membrane is obtained by forming a fibril-like polyolefin in a three-dimensional network shape, and thus a long curved path can be ensured compared to the nonwoven fabric, and the required characteristics may be achieved at the same time.

In view of the above circumstances, an object of an embodiment of the present disclosure is to provide a polyolefin microporous membrane suitable as a substrate for achieving both a performance of collecting a substance in a fluid such as an ionic substance and a performance of causing permeation of a substance other than the collection target.

Solution to Problem

A specific means for solving the above problem includes the following aspects.

<1> A polyolefin microporous membrane including a polyolefin, having a Gurley value of 0.01 seconds/100 mL or more and 20 seconds/100 mL or less, a thickness of 120 $\mu$m or more, a porosity of 77% or more and 98% or less, and an average pore size of 0.60 $\mu$m or more and 3.0 $\mu$m or less.

<2> The polyolefin microporous membrane according to <1>, in which the polyolefin contains polyethylene.

<3> The polyolefin microporous membrane according to <2>, in which the polyethylene contains ultra high molecular weight polyethylene, and a proportion of the ultra high molecular weight polyethylene to the entire polyolefin is 20% by mass or less.

<4> The polyolefin microporous membrane according to any one of <1> to <3>, in which the bubble point pressure is 0.005 MPa or more and 0.040 MPa or less.

<5> The polyolefin microporous membrane according to any one of <1> to <4>, in which a ratio of a tensile breaking strength in the MD direction to a tensile breaking strength in the TD direction (MD direction/TD direction) is 0.50 or more and 2.0 or less.

<6> The polyolefin microporous membrane according to any one of <1> to <5>, in which to a surface and/or inner surface of the polyolefin microporous membrane,

(1) one or more functional groups selected from the group consisting of a hydroxyl group, a carbonyl group, a carboxy group, a formyl group, a sulfo group, a sulfonyl group, a thiol group, an amino group, a nitrile group, a nitro group, a pyrrolidone ring group, a fluoro group, an ether bond, and an amide bond, or molecules or molecular chains having the functional groups are bonded, or

(2) resins having one or more functional groups selected from the group consisting of a hydroxyl group, a carbonyl group, a carboxy group, a formyl group, a sulfo group, a sulfonyl group, a thiol group, an amino group, a nitrile group, a nitro group, a pyrrolidone ring group, a fluoro group, an ether bond, and an amide bond are attached.

Advantageous Effects of Invention

An embodiment of the present disclosure provides a polyolefin microporous membrane suitable as a substrate for achieving both a performance of collecting a substance in a fluid such as an ionic substance and a performance of causing permeation of a substance other than the collection target.

Description of Embodiments

Hereinafter, embodiments of the invention will be described. These descriptions and examples are illustrative of embodiments and do not limit the scope of the invention. The mechanism of action described in the present disclosure includes estimation, and the correctness thereof does not limit the scope of the invention.

In the present disclosure, a numerical range indicated using "to" indicates a range including numerical values described before and after "to" as a lower limit value and an upper limit value, respectively.

In a numerical range described stepwise in the present disclosure, an upper limit value or a lower limit value described in one numerical range may be replaced with an upper limit value or a lower limit value of another numerical range described in a stepwise manner. In addition, in the numerical range described in the present disclosure, the upper limit value or the lower limit value of the numerical range may be replaced with a value shown in Examples.

In the present disclosure, the term "step" includes not only an independent step but also a step that cannot be clearly distinguished from other steps as long as the intended purpose of the step is achieved.

In the present disclosure, each component may contain a plurality of corresponding substances. In the present disclosure, when referring to the amount of each component in the composition and there are a plurality of substances corresponding to each component in the composition, the amount means the total amount of the plurality of substances present in the composition unless otherwise specified.

In the present disclosure, the "MD direction (machine direction)" of the polyolefin microporous membrane means a longitudinal direction in the polyolefin microporous membrane produced in an elongated shape, and the "TD direction (width direction)" means a direction orthogonal to the "machine direction".

<Polyolefin microporous membrane>

The polyolefin microporous membrane according to the present disclosure is a polyolefin microporous membrane containing polyolefin, having a Gurley value of 0.01 seconds/100 mL or more and 20 seconds/100 mL or less, a thickness of 120 $\mu$m or more, a porosity of 77% or more and 98% or less, and an average pore size of 0.60 $\mu$m or more and 3.0 $\mu$m or less.

The polyolefin microporous membrane according to the present disclosure is excellent in performance of collecting a substance in a fluid such as an ionic substance and performance of causing permeation of a substance other than the collection target. Specifically, as the substance to be collected, first, an ionic substance is assumed, and second, a particle having a size of 0.1 $\mu$m or more is assumed. The ionic substance assumed to be the collection target or the particle having the specific particle size may be present in the fluid, and the fluid may be a liquid or a gas.

In order to enhance the collection performance of the substance in a fluid such as an ionic substance, the thickness of the polyolefin microporous membrane is preferably large, and specifically, preferably 120 $\mu$m or more. However, when the thickness of the polyolefin microporous membrane is large, the Gurley value tends to increase. However, in the present disclosure, physical properties that the Gurley value is 0.01 seconds/100 mL or more and 20 seconds/100 mL or less are achieved by setting the average pore size of the polyolefin microporous membrane to the range of 0.60 $\mu$m or more and 3.0 $\mu$m or less, and setting the porosity to the range of 77% or more and 98% or less. As a result, it has been found that it is possible to provide a substrate that achieves the performance of collecting substances in a fluid such as an ionic substance and the permeation performance of the fluid in a well-balanced manner. In addition, the polyolefin microporous membrane according to the present disclosure can be suitably used as a filter for removing particles having a size of 0.1 $\mu$m or more.

In the present disclosure, the polyolefin microporous membrane means a microporous membrane containing polyolefin. The microporous membrane includes a three-dimensional network structure to which fibril-like polyolefin is linked, has a large number of micropores therein to form a structure in which the micropores are connected to each other, and is in a state in which gas or liquid can pass from one surface to the other surface.

The conventional polyolefin microporous membrane has room for improvement in at least one of a performance of collecting a substance in a fluid such as an ionic substance (hereinafter, also referred to as collection performance) and a performance of transmitting a fluid containing a substance other than the substance to be collected (hereinafter, also referred to as permeation performance).

The polyolefin microporous membrane according to the present disclosure satisfying the conditions of the specific Gurley value, thickness, porosity, and average pore size satisfies these performances in a well-balanced manner.

In the present disclosure, the form of the substance to be collected is not particularly limited. For example, the substance to be collected may be particulate or may not be particulate as a substance contained in a fluid such as an ionic substance.

When the substance to be collected is particulate, the average particle size of the substance to be collected may be within a range of 0.1 μm or more.

In the present disclosure, the average particle size of the substance to be collected is determined by an image analysis method. Specifically, 100 particles are observed using an electron microscope or the like, and the arithmetic average value of the particle sizes of the observed particles is taken as the average particle size of the collection target.

The substance to be collected may be in a state of being contained in a liquid or a gas.

[Polyolefin constituting polyolefin microporous membrane]

The polyolefin microporous membrane according to the present disclosure may contain only polyolefin or contain polyolefin and a material other than polyolefin. When the polyolefin microporous membrane contains polyolefin and a material other than polyolefin, the proportion of the polyolefin in the entire polyolefin microporous membrane is preferably 50% by mass or more, more preferably 70% by mass or more, and further preferably 80% by mass or more.

Polyolefin contained in the polyolefin microporous membrane may be only one polyolefin, or may be two or more types of polyolefins with different molecular structures, molecular weights, and the like.

The polyolefin microporous membrane may contain polyethylene as a polyolefin. In this case, the polyolefin microporous membrane may contain polyethylene singly as a polyolefin or may contain polyethylene and a polyolefin other than polyethylene (for example, polypropylene). When the polyolefin microporous membrane contains polyethylene and a polyolefin other than polyethylene as the polyolefin, the proportion of polyethylene in the entire polyolefin is preferably 50% by mass or more, more preferably 70% by mass or more, and further preferably 80% by mass or more.

The polyolefin microporous membrane may contain ultra high molecular weight polyethylene (UHMWPE) as polyethylene contained in the polyolefin. When the polyolefin microporous membrane contains an ultra high molecular weight polyethylene, the pore size of the polyolefin microporous membrane is not too large and the collection performance tends to be excellent.

When the polyolefin microporous membrane contains ultra high molecular weight polyethylene, the proportion of the ultra high molecular weight polyethylene to the entire polyolefin is preferably 20% by mass or less. When the proportion of the ultra high molecular weight polyethylene to the entire polyolefin is 20% by mass or less, the pore size of the polyolefin microporous membrane is not too small, and the permeation performance tends to be excellent. The proportion of the ultra high molecular weight polyethylene olefin to the entire polyolefin is preferably 18% by mass or less, and more preferably 16% by mass or less.

In addition, when the polyolefin microporous membrane contains ultra high molecular weight polyethylene, the proportion of the ultra high molecular weight polyethylene to the entire polyolefin is preferably 1% by mass or more. When the proportion of the ultra high molecular weight polyethylene to the entire polyolefin is 1% by mass or more, the mechanical strength of the polyolefin microporous membrane is easily increased. The proportion of the ultra high molecular weight polyethylene to the entire polyolefin is preferably 3% by mass or more, and more preferably 4% by mass or more.

When the polyolefin microporous membrane contains an ultra high molecular weight polyethylene and a polyolefin other than the ultra high molecular weight polyethylene (hereinafter also referred to as other polyolefins) as the polyolefin, the type of the other polyolefins is not particularly limited. As other polyolefins, high-density polyethylene (HDPE) is preferable. In the present disclosure, high-density polyethylene means polyethylene having a density of 942 kg/m$^3$ or more.

In the present disclosure, the ultra high molecular weight polyethylene means polyethylene having a weight-average molecular weight of 1 million or more and 6 million or less.

The weight-average molecular weight of the ultra high molecular weight polyethylene is preferably 3 million or more, and more preferably 4 million or more. In addition, the weight-average molecular weight of the ultra high molecular weight polyethylene is preferably 5 million or less, and more preferably 4.8 million or less.

In the present disclosure, the weight-average molecular weight of the polyolefin is measured by gel permeation chromatography.

Specifically, the polyolefin to be measured is heated and dissolved in o-dichlorobenzene, and measured by gel permeation chromatography (system: Alliance GPC 2000 type manufactured by Waters Corporation, column: GMH6-HT and GMH6-HTL) at the conditions of a column temperature of 135 °C and a flow rate of 1.0 mL/min. Molecular weight monodisperse polystyrene (manufactured by Tosoh Corporation) is used for molecular weight calibration.

[Gurley value]

The Gurley value of the polyolefin microporous membrane of the present disclosure is 0.01 seconds/100 mL or more and 20 seconds/100 mL or less.

When the Gurley value of the polyolefin microporous membrane of the present disclosure is 0.01 seconds/100 mL or more, sufficient collection performance is ensured, and when the Gurley value is 20 seconds/100 mL or less, sufficient permeation performance is ensured.

From the viewpoint of the collection performance, the Gurley value of the polyolefin microporous membrane is preferably 0.1 seconds/100 mL or more, and more preferably 1 second/100 mL or more.

From the viewpoint of permeation performance, the Gurley value of the polyolefin microporous membrane is preferably 15 seconds/100 mL or less, and more preferably 13 seconds/100 mL or less.

In the present disclosure, the Gurley value of the polyolefin microporous membrane is measured using a Gurley densometer manufactured by Toyo Seiki Seisaku-sho, Ltd. in accordance with JIS P8117: 2009. In the measurement, a time during which 200 ml of air passes through a sample of 28.6 mm$\varphi$ is measured, and a value converted per 100 ml is adopted by halving the time.

[Thickness]

The thickness of the polyolefin microporous membrane according to the present disclosure is 120 $\mu$m or more.

The thickness of the polyolefin microporous membrane of the present disclosure is 120 $\mu$m or more, thereby allowing the flow path in the polyolefin microporous membrane to be lengthened, and a region in which a substance in a fluid such as an ionic substance is adsorbed to be expanded.

From the viewpoint of the collection performance, the thickness of the polyolefin microporous membrane is preferably 130 $\mu$m or more, and more preferably 135 $\mu$m or more.

The upper limit of the thickness of the polyolefin microporous membrane is not particularly limited. From the viewpoint of permeation performance, the thickness of the polyolefin microporous membrane is preferably 500 $\mu$m or less, more preferably 400 $\mu$m or less, and further preferably 300 $\mu$m or less.

In the present disclosure, the thickness of the polyolefin microporous membrane is measured using a contact-type membrane thickness meter (ABS digimatic indicator manufactured by Mitutoyo Corporation, model number Model ID: ID-S112X). Specifically, the thickness of the polyolefin microporous membrane is measured at 20 points, and the arithmetic average value thereof is defined as the thickness of the polyolefin microporous membrane. A cylindrical terminal having a bottom surface diameter of 6.5 mm is used as the contact terminal. In addition, as another method for measuring the thickness of the polyolefin microporous membrane, there is a method that a contact type thickness meter (LITEMATIC manufactured by Mitutoyo Corporation) is used, a measurement terminal having a cylindrical shape with a diameter of 5 mm is used, the measurement terminal is adjusted such that a load of 7 g is applied during measurement, 20 points are measured, and arithmetic averaging of these is performed.

[Porosity]

The porosity of the polyolefin microporous membrane of the present disclosure is 77% or more and 98% or less.

When the porosity of the polyolefin microporous membrane of the present disclosure is 77% or more, sufficient permeation performance is ensured, and when the porosity is 98% or less, sufficient strength of the membrane is ensured.

From the viewpoint of permeation performance, the porosity of the polyolefin microporous membrane is preferably 78% or more, and more preferably 80% or more.

From the viewpoint of membrane strength, the porosity of the polyolefin microporous membrane is preferably 95% or less, and more preferably 90% or less.

In the present disclosure, the porosity of the polyolefin microporous membrane is determined according to the following calculation method. That is, when the constituent material of the polyolefin microporous membrane is a, b, c,..., n, the mass of each constituent material is Wa, Wb, Wc,..., Wn ($g/cm^2$), the true density of each constituent material is da, db, dc,..., dn ($g/cm^3$), and the thickness of the polyolefin microporous membrane is t (cm), the porosity $\varepsilon$ (%) is obtained by the following formula.

$$\varepsilon = \{1 - (Wa/da + Wb/db + Wc/dc + \ldots + Wn/dn)/t\} \times 100$$

[Average pore size]

The polyolefin microporous membrane of the present disclosure has an average pore size of 0.60 $\mu$m or more

and 3.0 μm or less.

The average pore size of the polyolefin microporous membrane of the present disclosure is 0.60 μm or more, thereby ensuring sufficient permeation performance even when the thickness of the polyolefin microporous membrane is 120 μm or more. In addition, the average pore size is 3.0 μm or less, thereby ensuring sufficient collection performance.

From the viewpoint of permeation performance, the average pore size of the polyolefin microporous membrane is preferably 0.61 μm or more, and more preferably 0.62 μm or more.

From the viewpoint of the collection performance, the average pore size of the polyolefin microporous membrane is preferably 2.0 μm or less, and more preferably 1.5 μm or less.

In the present disclosure, the average pore size of the polyolefin microporous membrane is determined by a half dry method defined in ASTM E1294-8 9 using a palm porometer (model: CFP-1200-A EXL) manufactured by PMI Corporation and using a Galwick (surface tension: 15.9 dyn/cm) manufactured by PMI Corporation as an immersion liquid. The measurement temperature is 25°C, and the measurement pressure is changed in the range of 0 kPa to 600 kPa.

[Bubble point pressure]

The polyolefin microporous membrane according to the present disclosure preferably has a bubble point pressure of 0.005 MPa or more and 0.040 MPa or less.

When the bubble point pressure of the polyolefin microporous membrane is 0.005 MPa or more, the collection performance tends to be excellent. When the bubble point pressure of the polyolefin microporous membrane is 0.040 MPa or less, the permeation performance tends to be excellent.

From the viewpoint of the collection performance, the bubble point pressure of the polyolefin microporous membrane is preferably 0.007 MPa or more, and more preferably 0.008 MPa or more.

From the viewpoint of permeation performance, the bubble point pressure of the polyolefin microporous membrane is preferably 0.035 MPa or less, and more preferably 0.030 MPa or less.

In the present disclosure, the bubble point pressure of the polyolefin microporous membrane is measured according to the bubble point test method of JIS K3832: 1990 by immersing the polyolefin microporous membrane in ethanol. The measurement is performed by changing the liquid temperature during the test to 24±2°C and increasing the applied pressure at a pressure increase rate of 2 kPa/sec.

[M/T Ratio]

In the polyolefin microporous membrane of the present disclosure, the ratio of the tensile breaking strength in the MD direction to the tensile breaking strength in the TD direction (also referred to as MD direction/TD direction), M/T ratio is preferably 0.50 or more and 2.0 or less.

When the M/T ratio of the polyolefin microporous membrane is within the above range, the physical strength of the polyolefin microporous membrane is sufficiently ensured, and this contributes to improvement in ion collection performance.

The M/T ratio of the polyolefin microporous membrane is more preferably 0.51 or more, and further preferably 0.52 or more. The M/T ratio of the polyolefin microporous membrane is more preferably 1.5 or less, and further preferably 1.2 or less.

In the present disclosure, the tensile breaking strength of the polyolefin microporous membrane is measured using a Tensilon tester RTG-1225 manufactured by Orientec Co., Ltd. in accordance with JIS K7176: 2014. The sample width is 15 mm, the distance between chucks (gauge length) of the tester is 500 mm, the sample is pulled at a speed of 200 mm/min, and a value obtained by dividing the load at the time when the sample breaks by the width of the sample is obtained. The same measurement operation is performed three times using three samples, and the obtained values are averaged to provide the value of the tensile breaking strength.

[Method for producing polyolefin microporous membrane]

The polyolefin microporous membrane can be produced, for example, by a production method including the following steps (I) to (IV).

Step (I): a step of preparing a solution containing a polyolefin and a volatile solvent having a boiling point of less than 210°C at an atmospheric pressure.

Step (II): a step of melt-kneading the solution, extruding the obtained melt-kneaded product from a die, and cooling and solidifying the melt-kneaded product to provide a first gel-like molded product.

Step (III): a step of stretching the first gel-like molded product in at least one direction (primary stretching) and drying the solvent to provide a second gel-like molded product.

Step (IV): a step of stretching the second gel-like molded product in at least one direction (secondary stretching).

The step (I) is a step of preparing a solution containing a polyolefin and a volatile solvent having a boiling point of less than 210°C at atmospheric pressure. The solution is preferably a thermoreversible sol-gel solution, and the thermoreversible sol-gel solution is prepared by heating and dissolving polyolefin in a solvent to form a sol. The volatile solvent having a boiling point of less than 210°C at atmospheric pressure is not particularly limited as long as it is a solvent capable of sufficiently dissolving a polyolefin. Specific examples of the volatile solvent include tetralin (206°C to 208°C), ethylene glycol (197.3°C), decalin (decahydronaphthalene, 187°C to 196°C), toluene (110.6°C), xylene (138°C to 144°C), diethyl triamine (107°C), ethylenediamine (116°C), dimethyl sulfoxide (189°C), and hexane (69°C), and decalin or xylene is preferable. In the above example, the temperature in parentheses is the boiling point at atmospheric pressure. The volatile solvents may be used singly or in combination of two or more.

The polyolefin used in the step (I) may be used singly or in combination of two or more, and can be selected according to desired physical properties of the polyolefin microporous membrane.

From the viewpoint of controlling the porous structure of the polyolefin microporous membrane, the solution prepared in the step (I) preferably has a polyolefin concentration of 10% by mass to 40% by mass, more preferably 15% by mass to 35% by mass, and further more preferably 20% by mass to 32% by mass. When the polyolefin concentration in the solution is 10% by mass or more, the occurrence of cutting in the membrane forming step of the polyolefin microporous membrane can be suppressed, and the mechanical strength of the polyolefin microporous membrane increases, and the handleability is improved. When the polyolefin concentration in the solution is 40% by mass or less, the polyolefin microporous membrane according to the present disclosure is easily obtained.

The step (II) is a step of melt-kneading the solution prepared in the step (I), extruding the obtained melt-kneaded product from a die, and cooling and solidifying to provide a first gel-like molded product. In the step (II), for example, an extruded product is obtained by extrusion from a die in a temperature range from the melting point of the polyolefin to the melting point + 65°C, and then the extruded product is cooled to provide a first gel-like molded product. The first gel-like molded product is preferably formed into a sheet shape. The cooling method is not particularly limited. For example, cooling may be performed by immersion in water or an organic solvent, contact with a cooled metal roll, or the like.

The step (III) is a step of stretching (primary stretching) the first gel-like molded product in at least one direction and drying the solvent to provide a second gel-like molded product. The stretching step of the step (III) may be uniaxial stretching or biaxial stretching. The biaxial stretching may be sequential biaxial stretching in which longitudinal stretching and transverse stretching are performed separately, or simultaneous biaxial stretching in which longitudinal stretching and transverse stretching are simultaneously performed. The stretching ratio (product of the longitudinal stretching ratio and the transverse stretching ratio) of the primary stretching is preferably 1.1 times to 3 times, and more preferably 1.1 times to 2 times, from the viewpoint of controlling the porous structure of the polyolefin microporous membrane. The temperature during the primary stretching is preferably 75°C or less.

The drying (drying step) of the solvent in the step (III) is preferably performed at a temperature at which the second gel-like molded product is not deformed, and more preferably performed at 60°C or less.

The stretching step and the drying step of the step (III) may be performed simultaneously or stepwise. For example, primary stretching may be performed during preliminary drying, followed by main drying, or primary stretching may be performed between preliminary drying and main drying. The primary stretching can be also performed in a state in which drying is controlled and the solvent remains in a suitable state.

The step (IV) is a step of stretching (secondary stretching) the second gel-like molded product in at least one direction. The stretching step of the step (IV) is preferably biaxial stretching. The biaxial stretching may be any of: sequential biaxial stretching in which longitudinal stretching and transverse stretching are performed separately; simultaneous biaxial stretching in which longitudinal stretching and transverse stretching are performed simultaneously; a step of stretching a plurality of times in the longitudinal direction and then stretching in the transverse direction; a step of stretching in the longitudinal direction and stretching a plurality of times in the transverse direction; and a step of sequential biaxial stretching and further stretching once or a plurality of times in the longitudinal direction and/or transverse direction.

The stretching ratio (product of the longitudinal stretching ratio and the transverse stretching ratio) of the secondary stretching is preferably 5 times to 90 times, more preferably 10 times to 60 times, from the viewpoint of controlling the porous structure of the polyolefin microporous membrane. The stretching temperature of the secondary stretching is preferably 70°C to 135°C, and more preferably 80°C to 130°C, from the viewpoint of controlling the porous structure of the polyolefin microporous membrane.

If necessary, the heat fixation treatment may be performed after the step (IV). The temperature of the heat fixation treatment is preferably 110°C to 150°C, and more preferably 120°C to 140°C, from the viewpoint of controlling the porous structure of the polyolefin microporous membrane.

If necessary, the extraction treatment of the solvent remaining in the polyolefin microporous membrane and the annealing treatment may be performed after the heat fixation treatment. The extraction treatment of the remaining solvent is performed, for example, by immersing the sheet subjected to the heat fixation treatment in a methylene chloride bath and eluting the remaining solvent in methylene chloride. It is preferable that the polyolefin microporous membrane immersed in the methylene chloride bath is withdrawn from the methylene chloride bath and then methylene chloride is removed by drying. The annealing treatment can be performed by transporting the polyolefin microporous membrane on a roll heated to 70°C to 140°C, or transporting the polyolefin microporous membrane in a state of being held such that the dimension in the width direction is constant in a heated atmosphere of 70°C to 140°C, after the extraction treatment of the remaining solvent.

[Surface treatment of polyolefin microporous membrane]

If necessary, the polyolefin microporous membrane may be subjected to a surface treatment. Performing the surface treatment allows a desired function to be imparted to the polyolefin microporous membrane.

The method for performing the surface treatment is not particularly limited, and examples thereof include a graft treatment, a plasma treatment, an electron beam treatment, a corona treatment, and a coating treatment with a functional polymer.

The polyolefin microporous membrane subjected to the surface treatment may be in a state in which to a surface and/or inner surface of the polyolefin microporous membrane,

(1) one or more functional groups selected from the group consisting of a hydroxyl group, a carbonyl group, a carboxy group, a formyl group, a sulfo group, a sulfonyl group, a thiol group, an amino group, a nitrile group, a nitro group, a pyrrolidone ring group, a fluoro group, an ether bond, and an amide bond, or molecules or molecular chains having the functional groups are bonded, or

(2) resins having one or more functional groups selected from the group consisting of a hydroxyl group, a carbonyl group, a carboxy group, a formyl group, a sulfo group, a sulfonyl group, a thiol group, an amino group, a nitrile group, a nitro group, a pyrrolidone ring group, a fluoro group, an ether bond, and an amide bond are attached.

Examples of the molecule having the above functional group include a molecule containing a functional group and a hydrocarbon group. A functional group or a molecule having the functional group may be further bonded to a functional group or a molecule having the functional group bonded to a polyolefin. In addition, the result of performing the above surface treatment on the position where one hydrogen atom of the polyolefin constituting the polyolefin microporous membrane of the present disclosure includes an aspect in which a molecule having two or more functional groups is bonded to the polyolefin to form a molecular chain in a side chain shape from the principal chain of the polyolefin.

Examples of the resin having a functional group include polyvinyl alcohol, an olefin-vinyl alcohol-based resin, an acrylic-vinyl alcohol-based resin, a methacrylic-vinyl alcohol-based resin, a vinyl pyrrolidone-vinyl alcohol-based resin, polyacrylic acid, polymethacrylic acid, a perfluorosulfonic acid-based resin, polystyrene sulfonic acid, polytetrafluoroethylene, a tetrafluoroethylene-hexafluoropropylene copolymer, perfluoroalkoxy alkane, an ethylene-tetrafluoroethylene copolymer, and polyvinylidene fluoride.

In an embodiment, the polyolefin microporous membrane may be subjected to a surface treatment for enhancing affinity to a substance to be collected or a medium containing the substance. For example, enhancing the hydrophilicity of the polyolefin microporous membrane by the surface treatment may improve the collection performance for a hydrophilic substance or a medium containing the hydrophilic substance.

In an embodiment, the polyolefin microporous membrane may be subjected to a surface treatment for introducing an ionic functional group. For example, introducing an anionic (or cationic) functional group into the polyolefin microporous membrane by the surface treatment may improve the collection performance for a cationic (or anionic) substance.

[Graft filling amount]

The polyolefin microporous membrane of the present disclosure preferably has a graft filling amount of 2.0 $g/m^2$ or more.

When the graft filling amount of the polyolefin microporous membrane is 2.0 $g/m^2$ or more, the effect of the surface treatment is sufficiently exhibited in the surface treatment on the polyolefin microporous membrane. The graft filling amount of the polyolefin microporous membrane is more preferably 3.0 $g/m^2$ or more, and further more preferably 5.0 $g/m^2$ or more.

The upper limit of the graft filling amount of the polyolefin microporous membrane is not particularly limited, and is preferably 15.0 $g/m^2$ or less, and more preferably 14.0 $g/m^2$ or less, from the viewpoint of ensuring sufficient permeation performance.

The graft filling amount of the polyolefin microporous membrane is an indicator indicating the degree of the effect of the surface treatment that can be applied to the polyolefin microporous membrane, and it is not necessary that the polyolefin microporous membrane is actually surface-treated.

In the present disclosure, the graft filling amount of the polyolefin microporous membrane is measured by the following method.

The polyolefin microporous membrane is cut to prepare a sample of 10 cm $\times$ 10 cm. The sample is subjected to plasma treatment for 1 minute under an argon atmosphere under conditions of an output of 20 W and a vacuum degree of 10 Pa. Then, the sample is immersed in a solution of acrylic acid (concentration: 10% by mass, solvent: pure water) and reacted at 80°C for 30 minutes. Thereafter, the sample is washed with a mixed solution of water and ethanol (mass ratio of 1:1) and dried with a vacuum dryer. The graft filling amount of the sample is calculated by the following formula. The basis weight of the sample is a value obtained by multiplying the measurement value of the mass of the sample by 100.

Graft filling amount (g/m$^2$) = basis weight of sample after graft (g/m$^2$) - basis weight of sample before graft (g/m$^2$)

[Use of polyolefin microporous membrane]

The use of the polyolefin microporous membrane is not particularly limited. Specific uses include an air filter, a liquid filter, a moisture permeable waterproof membrane, a bag, a dust collection sheet substrate, and the like.

A preferred use of the polyolefin microporous membrane of the present disclosure is a case where a substance to be collected is chemically reacted with the surface of the polyolefin microporous membrane and collected (for example, ions are collected by ionic bonding).

When the polyolefin microporous membrane is used for collecting a particulate substance, the average particle size of the substance to be collected may be in the range of 0.1 $\mu$m or more and 10 $\mu$m or less, may be in the range of 0.2 $\mu$m or more and 7 $\mu$m or less, or may be in the range of 0.5 $\mu$m or more and 5 $\mu$m or less.

The substance to be collected may be contained in either a liquid or a gas.

Examples

Hereinafter, the polyolefin microporous membrane of the present disclosure will be described more specifically with reference to Examples.

Materials, amounts used, ratios, treatment procedures, and the like shown in the following examples can be appropriately changed without departing from the gist of the present disclosure. Therefore, the range of the polyolefin microporous membrane of the present disclosure should not be construed as being limited to the following specific examples.

[Example 1]

A polyethylene composition was prepared by mixing 15 parts by mass of ultra high molecular weight polyethylene (UHMWPE) having a weight-average molecular weight (Mw) of 4.6 million and 85 parts by mass of high-density polyethylene (HDPE) having a weight-average molecular weight (Mw) of 0.56 million and a density of 950 kg/m$^3$. Then, the polyethylene composition and decalin as a solvent were mixed such that the concentration of the polyethylene composition was 30% by mass to prepare a polyethylene solution.

The polyethylene solution was extruded into a sheet shape from a die at a temperature of 160°C, and then the extrudate was cooled in a water bath at a water temperature of 20°C to provide a first gel-like sheet.

The first gel-like sheet was subjected to preliminary drying at a condition of 60°C for 15 minutes, then primary stretching at 1.3 times in the MD direction, and main drying at a condition of 55°C for 10 minutes to provide a second gel-like sheet. The remaining amount of the solvent in the second gel-like sheet was less than 1% by mass.

Then, as the secondary stretching, the second gel-like sheet was stretched at a temperature of 80°C in the MD direction at a magnification of 2.0 times, and then stretched at a temperature of 125°C in the TD direction at a magnification of 4.7 times. Immediately after the secondary stretching, heat treatment (heat fixation) was performed at 130°C

The solvent in the sheet was extracted while the thermally fixed sheet was immersed in a methylene chloride bath composed of one tank for 1 minute. The sheet was carried out of the methylene chloride bath, and then the sheet was dried on a heating roll at 40°C to remove methylene chloride. Thereafter, the sheet was annealed under the heating atmosphere of 80°C.

Through the above steps, the polyolefin microporous membrane of Example 1 was obtained. Observation of the polyolefin microporous membrane of Example 1 with a scanning electron microscope indicated the structure including a three-dimensional network structure to which fibril-like polyolefin was linked and having a large number of micropores therein to form a structure in which these micropores were linked.

[Examples 2 to 4 and Comparative Examples 1 to 6]

Polyethylene microporous membranes of Examples 2 to 4 and Comparative Examples 1 to 6 were produced in the same manner as in Example 1 except that the composition of the polyethylene solution or the conditions of the step of producing the polyolefin microporous membrane were changed as shown in Table 1. Observation of the polyolefin microporous membranes of Examples 2 to 4 and Comparative Examples 1 to 6 with a scanning electron microscope indicated the structure including a three-dimensional network structure to which fibril-like polyolefin was linked and having a large number of micropores therein to form a structure in which these micropores were linked.

[Table 1]

| | Polyolefin | | Solvent | | Extrusion | | | | | | |
|---|---|---|---|---|---|---|---|---|---|---|---|
| | UHMWPE :HDPE | Content% | Type | Content% | Resin temperature (°C) | Cooling Temperature (°C) | Predrying temperature (°C) | Preliminary drying time [minutes] | Primary stretching ratio [times) | This drying temperature (°C) | Drying time [minutes] |
| Example 1 | 15:85 | 30 | Decalin | 70 | 160 | 20 | 60 | 15 | 1.3 | 55 | 10 |
| Example 2 | 15:85 | 30 | Decalin | 70 | 159 | 20 | 60 | 15 | 1.6 | 55 | 7 |
| Example 3 | 5:95 | 25 | Decalin | 75 | 160 | 20 | 95 | 10 | 1.8 | 57 | 5 |
| Example 4 | 15:85 | 30 | Decalin | 70 | 159 | 20 | 60 | 15 | 1.4 | 55 | 7 |
| Comparative Example 1 | 15:85 | 30 | Decalin | 70 | 159 | 20 | 60 | 10 | 1.3 | 50 | 7 |
| Comparative Example 2 | 15:85 | 25 | Decalin | 75 | 148 | 20 | 70 | 10 | 1.4 | 57 | 5 |
| Comparative Example 3 | 5:95 | 25 | Decalin | 75 | 155 | 20 | 70 | 10 | 1.8 | 57 | 5 |
| Comparative Example 4 | 50:50 | 25 | Decalin | 75 | 169 | 20 | 56 | 10 | 1.4 | 56 | 10 |
| Comparative Example 5 | 5:95 | 25 | Decalin | 75 | 146 | 20 | 70 | 10 | 1.1 | 57 | 5 |
| Comparative Example 6 | 5:95 | 26 | Decalin | 74 | 157 | 20 | 60 | 15 | 1.8 | 55 | 7 |

| | Secondary stretching | | | | Heat Fixing Temperature (°C) | Extraction | | | | Annealing method | Annealing temperature (°C) |
| | MD | | TD | | | | | | | | |
| | Temperature (°C) | Magnification [times] | Temperature (°C) | Magnification [times] | | Extraction Tank number [tank] | Extraction time [min] | Drying method | Drying temperature (°C) | | |
|---|---|---|---|---|---|---|---|---|---|---|---|
| Example 1 | 80 | 2.0 | 125 | 4.7 | 130 | 1 | 1 | Heating roll | 40 | Heating atmosphere | 80 |
| Example 2 | 80 | 2.0 | 125 | 6.0 | 125 | 3 | 3 | Heating roll | 40 | Heating atmosphere | 80 |
| Example 3 | 90 | 3.5 | 125 | 6.0 | 134 | 3 | 3 | Heating roll | 40 | Heating atmosphere | 80 |
| Example 4 | 80 | 2.0 | 125 | 9.0 | 126 | 3 | 3 | Heating roll | 40 | Heating atmosphere | 80 |
| Comparative Example 1 | 80 | 2.5 | 125 | 7.0 | 134 | 3 | 2 | Heating roll | 40 | Heating atmosphere | 80 |
| Comparative Example 2 | 90 | 3.0 | 125 | 9.0 | 144 | 2 | 1 | Heating atmosphere | 40 | - | - |
| Comparative Example 3 | 80 | 3.5 | 120 | 5.0 | 125 | 3 | 2 | Heating atmosphere | 40 | Heating roll | 80 |
| Comparative Example 4 | 90 | 3.0 | 130 | 8.0 | 138 | 3 | 2.5 | Heating roll | 39 | Heating atmosphere | 120 |
| Comparative Example 5 | 90 | 2.0 | 125 | 5.0 | 134 | 2 | 1 | Heating atmosphere | 40 | Heating roll | 120 |
| Comparative Example 6 | 80 | 2.5 | 120 | 8.0 | 130 | 3 | 2 | Heating roll | 40 | Heating atmosphere | 80 |

[Measurement of Gurley value]

The Gurley value of the polyolefin microporous membrane was measured using a Gurley densometer manufactured by Toyo Seiki Seisaku-sho, Ltd. in accordance with JIS P8117: 2009. In the measurement, a time during which 200 ml of air passes through a sample of 28.6 mmφ was measured, and a value converted per 100 ml was adopted by halving the time. The results are shown in Table 2.

[Measurement of thickness]

The thickness of the polyolefin microporous membrane was measured using a contact-type membrane thickness meter (ABS digimatic indicator manufactured by Mitutoyo Corporation, model number Model ID: ID-S112X). Specifically, the thickness of the polyolefin microporous membrane was measured at 20 points, and the arithmetic average value thereof was defined as the thickness. A cylindrical terminal having a bottom surface diameter of 6.5 mm was used as the contact terminal. The results are shown in Table 2.

[Measurement of porosity]

The porosity of the polyolefin microporous membrane was determined according to the following calculation method. That is, when the constituent material of the polyolefin microporous membrane is a, b, c,..., n, the mass of each constituent material is $W_a$, $W_b$, $W_c$,..., $W_n$ (g/cm$^2$), the true density of each constituent material is $d_a$, $d_b$, $d_c$,..., $d_n$ (g/cm$^3$), and the thickness of the polyolefin microporous membrane is t (cm), the porosity ε (%) was obtained by the following formula. The results are shown in Table 2.

$$\varepsilon = \{1 - (W_a/d_a + W_b/d_b + W_c/d_c + … + W_n/d_n)/t\} \times 100$$

[Measurement of average pore size]

The average pore size of the polyolefin microporous membrane was determined by a half dry method defined in ASTM E1294-8 9 using a palm porometer (model: CFP-1200-A EXL) manufactured by PMI Corporation and using a Galwick (surface tension: 15.9 dyn/cm) manufactured by PMI Corporation as an immersion liquid. The measurement temperature was 25°C, and the measurement pressure was changed from 0 kPa to 600 kPa.

[Measurement of bubble point pressure]

The bubble point pressure of the polyolefin microporous membrane was measured according to the bubble point test method of JIS K3832: 1990 by immersing the polyolefin microporous membrane in ethanol. The measurement was performed by changing the liquid temperature during the test to 24±2°C and increasing the applied pressure at a pressure increase rate of 2 kPa/sec.

[Measurement of tensile breaking strength]

The tensile breaking strength of the polyolefin microporous membrane was measured using a Tensilon tester RTG-1225 manufactured by Orientec Co., Ltd. in accordance with JIS K7176: 2014. The sample width was 15 mm, the distance between chucks (gauge length) of the tester was 500 mm, the sample was pulled at a speed of 200 mm/min, and a value obtained by dividing the load at the time when the sample broke by the width of the sample was obtained. The same measurement operation was performed three times using three samples, and the obtained values were averaged to provide the value of the tensile breaking strength. The M/T ratio was calculated from the values of the tensile breaking strengths measured in the MD direction and the TD direction of the polyolefin microporous membrane. The results are shown in Table 2.

[Measurement of graft filling amount]

The polyolefin microporous membrane was cut to prepare a sample of 10 cm × 10 cm. The sample was subjected to plasma treatment for 1 minute under an argon atmosphere under the conditions of an output of 20 W and a vacuum degree of 10 Pa. Then, the sample was immersed in a solution of acrylic acid (concentration: 10% by mass, solvent: pure water) and reacted at 80°C for 30 minutes. Thereafter, the sample was washed with a mixed solution of water and ethanol (mass ratio of 1:1) and dried with a vacuum dryer. The graft filling amount of the sample was calculated by the following formula. The basis weight of the sample was a value obtained by multiplying the measurement value of the mass of the sample by 100. The results are shown in Table 2.

Graft filling amount (g/m$^2$) = basis weight of sample after graft (g/m$^2$) - basis weight of sample before graft (g/m$^2$)

[Measurement of liquid flow rate]

The polyolefin microporous membrane subjected to the surface treatment described in the method for measuring the graft filling amount described above was cut into a circular shape having a diameter of 30 mm and set in a stainless steel permeable cell having a diameter of 16 mm. Pure water (10 mL) measured previously with a differential pressure of 94 kPa was permeated, and the time required for the total amount of pure water to permeate was measured.
The time required for 10 mL of pure water to permeate was denoted as "A" in the case of 20 seconds or less, "B" in the case of more than 20 seconds and 50 seconds or less, "C" in the case of more than 50 seconds and 100 seconds or less, and "D" in the case of more than 100 seconds. The results are shown in Table 2.

[Measurement of ion collection rate]

Copper ions were dissolved in pure water to prepare a copper ion aqueous solution (concentration: 1 ppm). The copper ion aqueous solution and the polyolefin microporous membrane subjected to the surface treatment described in the method for measuring the graft filling amount described above were set in the measurement apparatus, and the copper ion aqueous solution (10 mL) was filtered at a reduced pressure of 94 kPa. The copper ion concentration (ppm) of the copper ion aqueous solution after filtration was measured by inductively coupled plasma emission spectrometry. The ion collection rate of the polyolefin microporous membrane was calculated by the following formula.
The collection performance of the polyolefin microporous membrane was evaluated as "A" when the ion collection rate was 99% or more, "B" when the ion collection rate was 95% or more and less than 99%, "C" when the ion collection rate was 90% or more and less than 95%, and "D" when the ion collection rate was less than 90. The results are shown in Table 2.

Ion collection rate (%) = {(concentration before filtration - concentration after filtration)/concentration before filtration} × 100

[Measurement of weight-average molecular weight of polyolefin]

The weight-average molecular weight of the polyolefin used for producing the polyolefin microporous membrane was measured by gel permeation chromatography.
Specifically, the polyolefin to be measured was heated and dissolved in o-dichlorobenzene, and measured by gel permeation chromatography (system: Alliance GPC 2000 type manufactured by Waters Corporation, column: GMH6-HT and GMH6-HTL) at the conditions of a column temperature of 135°C and a flow rate of 1.0 mL/min. Molecular weight monodisperse polystyrene (manufactured by Tosoh Corporation) was used for molecular weight calibration.

[Judgment]

When both the evaluation of the ion collection rate and the evaluation of the liquid flow rate were A or B, it was determined as "passed", and when either one was C or D, it was determined as "failed". The results are shown in Table 2.

[Table 2]

| | Average Pore Diameter | Thickness | Porosity | Gurley value | **Bubble** Point Pressure | Tensile Strength at Break | | M/T ratio | Evaluation | | | |
|---|---|---|---|---|---|---|---|---|---|---|---|---|
| | | | | | | MD | TD | | Graft Filling Amount | **Liquid Flow** Rate | **Ion Trapping** Rate | Judgment |
| | μm | μm | % | s/100mL | MPa | kg/cm | | - | g/m$^2$ | | | |
| Example 1 | 0.79 | 265 | 86 | 7 | 0.027 | 1.3 | 2.0 | 0.64 | 13.5 | A | A | Passed |
| Example 2 | 0.62 | 202 | 89 | 6 | 0.029 | 1.0 | 1.9 | 0.53 | 84 | A | A | Passed |
| Example 3 | 1.20 | 162 | 81 | 3 | 0.010 | 1.2 | 2.5 | 0.50 | 7.9 | A | A | Passed |
| Example 4 | 0.61 | 137 | 87 | 4 | 0.032 | 0.8 | 2.2 | 0.34 | 7.3 | A | B | Passed |
| Comparative Example 1 | 0.48 | 84 | 82 | 7 | 0.037 | 1.0 | 1.9 | 0.53 | 6.4 | C | C | **Failed** |
| Comparative Example 2 | 0.32 | 155 | 76 | 29 | 0.040 | 2.8 | 3.2 | 0.88 | 19.5 | D | A | **Failed** |
| Comparative Example 3 | 4.90 | 62 | 88 | 6 | 0.006 | 0.2 | 0.2 | 1.17 | 2.2 | A | D | Failed |
| Comparative Example 4 | 0.21 | 38 | 74 | 22 | 0.159 | 1.7 | 2.2 | 0.77 | 6.2 | D | B | **Failed** |
| Comparative Example 5 | 1.55 | 92 | 86 | 0.5 | 0.014 | 0.3 | 0.7 | 0.36 | 2.6 | A | D | Failed |
| Comparative Example 6 | 1.40 | 109 | 90 | 1 | 0.008 | 0.3 | 0.4 | 0.75 | 2.3 | A | D | **Failed** |

As shown in Table 2, the polyolefin microporous membranes of the examples in which the Gurley value, the thickness, the porosity, and the average pore size satisfied the conditions of the present disclosure were excellent in the overall evaluation of the collection performance and the permeation performance as compared with the polyolefin microporous membranes of the comparative examples in which at least one of the Gurley value, the thickness, the porosity, and the average pore size did not satisfy the conditions of the present disclosure.

The entire disclosure of Japanese Patent Application Publication No. 2023-015408 is incorporated herein by reference. All documents, patent applications, and technical standards described in the present specification are incorporated by reference in the present specification to the same extent as when individual documents, patent applications, and technical standards are specifically and individually described.

**Claims**

1. A polyolefin microporous membrane comprising a polyolefin, having a Gurley value of 0.01 seconds/100 mL or more and 20 seconds/100 mL or less, a thickness of 120 $\mu$m or more, a porosity of 77% or more and 98% or less, and an average pore size of 0.60 $\mu$m or more and 3.0 $\mu$m or less.

2. The polyolefin microporous membrane according to claim 1, wherein the polyolefin contains polyethylene.

3. The polyolefin microporous membrane according to claim 2, wherein the polyethylene contains ultra high molecular weight polyethylene, and a proportion of the ultra-high molecular weight polyethylene to the entire polyolefin is 20% by mass or less.

4. The polyolefin microporous membrane according to claim 1, wherein a bubble point pressure is 0.005 MPa or more and 0.040 MPa or less.

5. The polyolefin microporous membrane according to claim 1, wherein a ratio of a tensile breaking strength in a MD direction to a tensile breaking strength in a TD direction (MD direction/TD direction) is 0.50 or more and 2.0 or less.

6. The polyolefin microporous membrane according to claim 1, wherein
   to a surface and/or inner surface of the polyolefin microporous membrane,

   (1) one or more functional groups selected from the group consisting of a hydroxyl group, a carbonyl group, a carboxy group, a formyl group, a sulfo group, a sulfonyl group, a thiol group, an amino group, a nitrile group, a nitro group, a pyrrolidone ring group, a fluoro group, an ether bond, and an amide bond, or molecules or molecular chains having the functional groups are bonded, or
   (2) resins having one or more functional groups selected from the group consisting of a hydroxyl group, a carbonyl group, a carboxy group, a formyl group, a sulfo group, a sulfonyl group, a thiol group, an amino group, a nitrile group, a nitro group, a pyrrolidone ring group, a fluoro group, an ether bond, and an amide bond are attached.

## INTERNATIONAL SEARCH REPORT

| International application No. |
|---|
| **PCT/JP2024/002816** |

| **A.** | **CLASSIFICATION OF SUBJECT MATTER** |
|---|---|

*C08J 9/36*(2006.01)i; *C08J 7/18*(2006.01)i; *C08J 9/26*(2006.01)i
FI:  C08J9/36 CES; C08J7/18; C08J9/26 102

According to International Patent Classification (IPC) or to both national classification and IPC

| **B.** | **FIELDS SEARCHED** |
|---|---|

Minimum documentation searched (classification system followed by classification symbols)

    C08J9/00-9/42; 9/36; B01D69/00-71/82; C08J7/18

Documentation searched other than minimum documentation to the extent that such documents are included in the fields searched

    Published examined utility model applications of Japan 1922-1996
    Published unexamined utility model applications of Japan 1971-2024
    Registered utility model specifications of Japan 1996-2024
    Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP paragraphs [2006]-[8959] A (MITSUI CHEMICALS, INC.) 12 January 2006 (2006-01-12) paragraphs [0029], [0051], [0052], examples 1-3 | 1-2, 4, 6 |
| A | | 3, 5 |
| X | JP 1-101340 A (MINNESOTA MINING & MFG. COMPANY) 19 April 1989 (1989-04-19) p. 2, upper right column, lines 17-20, p. 16, lower left column, lines 10-20, table 9, example 36 | 1, 4-5 |
| Y | | 6 |
| A | | 2-3 |
| Y | WO 2020/085449 A1 (TEIJIN LIMITED) 30 April 2020 (2020-04-30) claims, paragraphs [0001], [0080]-[0084] | 6 |
| A | | 1-5 |
| A | JP 11-106552 A (TONEN CHEM. CORP.) 20 April 1999 (1999-04-20) claims, examples | 1-6 |

✓ Further documents are listed in the continuation of Box C.     ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

| International application No. |
| --- |
| **PCT/JP2024/002816** |

| C. | DOCUMENTS CONSIDERED TO BE RELEVANT | | |
| --- | --- | --- |
| Category* | Citation of document, with indication, where appropriate, of the relevant passages | Relevant to claim No. |
| A | JP 2019-199529 A (MITSUBISHI CHEMICAL CORPORATION) 21 November 2019 (2019-11-21) claims, examples | 1-6 |
| A | WO 00/20493 A1 (TONEN CHEM. CORP.) 13 April 2000 (2000-04-13) claims, examples | 1-6 |

Form PCT/ISA/210 (second sheet) (July 2022)

INTERNATIONAL SEARCH REPORT
Information on patent family members

International application No.

**PCT/JP2024/002816**

| Patent document cited in search report | | | Publication date (day/month/year) | Patent family member(s) | | | Publication date (day/month/year) |
|---|---|---|---|---|---|---|---|
| JP | 2006-8959 | A | 12 January 2006 | (Family: none) | | | |
| JP | 1-101340 | A | 19 April 1989 | US 4867881 A example 36 | | | |
| WO | 2020/085449 | A1 | 30 April 2020 | KR 10-2021-0055091 A CN 112912165 A | | | |
| JP | 11-106552 | A | 20 April 1999 | (Family: none) | | | |
| JP | 2019-199529 | A | 21 November 2019 | (Family: none) | | | |
| WO | 00/20493 | A1 | 13 April 2000 | US 2005/0098913 A1 claims, examples | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019198833 A
- JP 2023015408 A